**Europäisches Patentamt**

(19) **European Patent Office**

**Office européen des brevets**

(11) Veröffentlichungsnummer: **0 216 255**

**A2**

(12) # EUROPÄISCHE PATENTANMELDUNG

(21) Anmeldenummer: **86112534.2**

(22) Anmeldetag: **10.09.86**

(51) Int. Cl.⁴: **B 29 C 47/42**
**B 29 C 47/66**
**//B29K27:06**

(30) Priorität: **14.09.85 DE 3532940**

(43) Veröffentlichungstag der Anmeldung:
**01.04.87 Patentblatt 87/14**

(84) Benannte Vertragsstaaten:
**AT DE FR GB IT**

(71) Anmelder: **Battenfeld Fischer Blasformtechnik GmbH**
**Hermann-Löns-Strasse 7**
**D-5204 Lohmar 1(DE)**

(72) Erfinder: **Junk, Paul Bernd, Dr.**
**Boettgerstrasse**
**D-5206 Neunkirchen 1(DE)**

(72) Erfinder: **Kross, Stefan**
**Aggerstrasse 15-17**
**D-5200 Siegburg(DE)**

(74) Vertreter: **Müller, Gerd et al,**
**Patentanwälte F.W. Hemmerich Gerd Müller, Dipl.-Ing. D.**
**Grosse Felix Pollmeier Hammerstrasse 2**
**D-5900 Siegen 1(DE)**

(54) **Extruder zur Plastifizierung und Homogenisierung von PVC-Kunststoffen.**

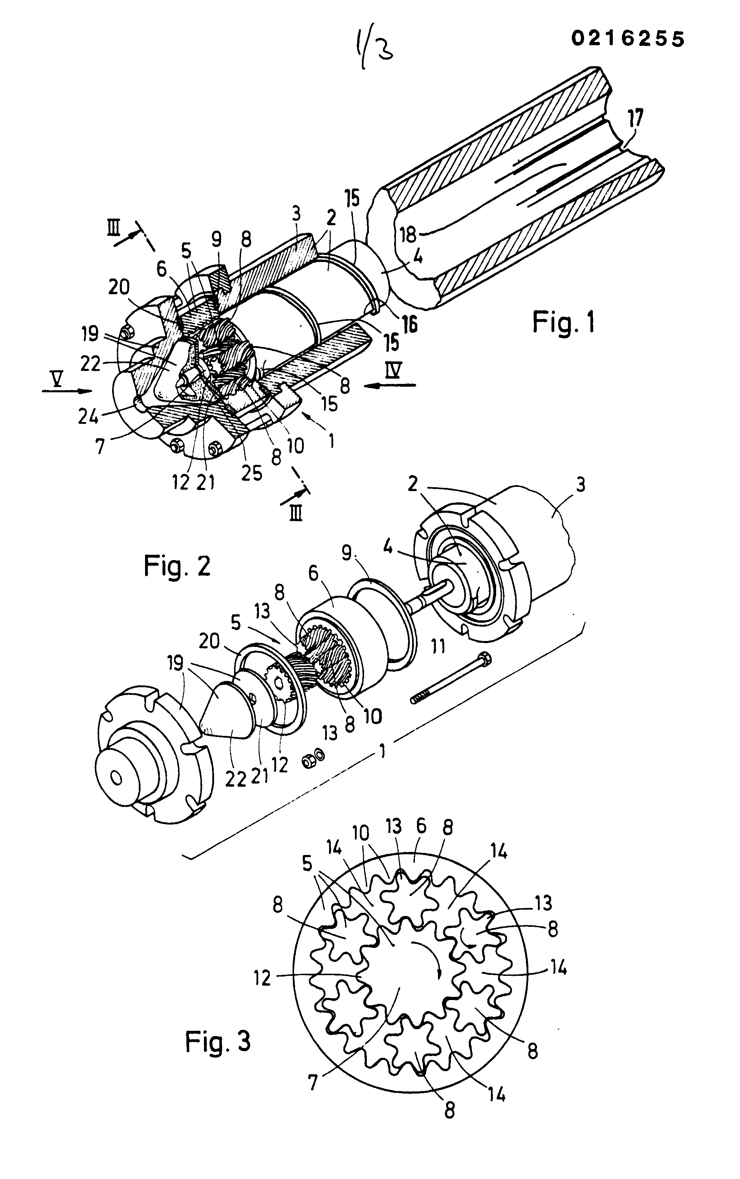

(57) Zur Plastifizierung und Homogenisierung von PVC–Kunststoffen, aus denen durch Blasformung Hohlkörper, wie Flaschen oder dergl. hergestellt werden sollen, wird ein Extruder 1 eingesetzt. Dieser Extruder 1 ist gekennzeichnet durch einen zumindest ein kühlbartes Gehäuse 3 aufweisenden Einschnecken-Extrudertail 2, dessen Schnecke 4 mit flachen und breiten Schneckengängen 16 versehen ist und der eine mit Nuten 17 ausgestattete Förderzone 18 aufweist. Der Extruder 1 hat ferner einen zwischen dem Einschnecken-Extruderteil 2 und einem Düsenkopf 19 angeordneten Planetenwalzen-Extruderteil 5 mit mehreren schraubenverzahnten Planetenwalzen 8, die einerseits mit dem entsprechende Innenverzahnung aufweisenden und temperaturgesteuerten oder -geregelten ortsfesten Außenzylinder 6 sowie andererseits mit einer zu ihnen passend außenverzahnten und von der Schnecke 4 des Einschnecken-Extruderteils 2 drehangetriebenen, temperaturgesteuerten bzw. -geregelten, Zentralspindel 7 kämmen. Von den Planetenwalzen 8 werden zwischen dem Außenzylinder 6 und der Zentralspindel 7 mehrere auf einer Kreisbahn umlaufend verlagerbare Schmelzekammern gegeneinander abgegrenzt, in denen die Kunststoffmasse außerordentlich vielen Walk- und Preßvorgängen unterzogen werden, bevor sie in den Ringspalt 25 des Düsenkopfes 19 gelangt (Fig 1).

Fig. 1

EP 0 216 255 A2

Croydon Printing Company Ltd

Extruder zur Plastifizierung und Homogenisierung von PVC-Kunststoffen

Die Erfindung betrifft einen Extruder zur Plastifizierung und Homogenisierung von PVC-Kunststoffen mit angeschlossenem Düsenkopf, insbesondere zur Herstellung von Vorformlingen für die Blasformung von Hohlkörpern, wie Flaschen oder dergl.

Hohlkörper, und zwar insbesondere Flaschen oder dergleichen, aus Kunststoff müssen in ein und derselben Formgestaltung und bei übereinstimmendem Volumen häufig in sehr großen Stückzahlen mittels Blasformmaschinen hergestellt werden, die mit einem Extruder zusammenarbeiten. So kommt es beispielsweise vor, daß pro Jahr in ein und demselben Unternehmen zwischen 80 Millionen und 100 Millionen Flaschen in ein und derselben Ausführung zum Zwecke ihrer Befüllung verfügbar sein müssen.

Die rationelle und kostengünstige Herstellung solcher Stückzahlen von Flaschen auf sogenannten Plattenmschinen (keine Radmaschinen) ist beim Einsatz möglichst weniger Blasformmaschinen nur unter Benutzung sogenannter Mehrfachspritzköpfe oder Mehrfachformköpfe erreichbar, die jeweils von einem Extruder mit dem hierzu notwendigen plastifizierten und homogenisierten Kunststoffmaterial beschickt werden müssen.

Der praktische Einsatz solcher Mehrfachspritzköpfe oder Mehrfachformköpfe konnte bisher jedoch nur für solche Fälle verwirklicht werden, in denen Blasformmaschinen und Extruder zur Verarbeitung von Polyäthylen-Kunststoffen ausgelegt sind.

Bei der Verarbeitung von starren bzw. steifen PVC-Kunststoffen ist dies jedoch bisher einerseits wegen der thermischen Empfindlichkeit dieses Materials und andererseits wegen der von den Maschinen her gegebenen Einschränkungen praktisch noch nicht möglich.

Vielmehr ist es zur Erzielung einer Fertigungsleistung von 80 bis 100 Millionen Flaschen in einem Unternehmen notwendig, mindestens 10 Blasformmaschinen der bisher üblichen Art gleichzeitig zu betreiben.

Der Erfindung liegt die Aufgabe zugrunde, einen Weg zur Herstellung von Hohlkörpern, wie Flaschen oder dergl., aus PVC-Kunststoffen aufzuzeigen, der bei Benutzung einer Blasformmaschine durch Einsatz sogenannter Mehrstrang-Spritzköpfe bzw. Mehrstrang-Formköpfe die angestrebten hohen Fertigungsstückzahlen ermöglicht. Dabei geht es primär darum, einen Extruder der eingangs angegebenen Gattung zu schaffen, welcher die sich auf der thermischen und mechanischen Inhomogenität der PVC-Kunststoffe erwachsenden Probleme ausräumt. Dabei kommt es wesentlich darauf an, die im PVC-Kunststoff entstehenden starken Temperaturgefälle oder Temperaturunterschiede zu vermeiden, welche die Folgen einer schnellen Energiezuführung sind, die wegen der bei PVC-Kunststoffen gegebenen Abbauprobleme erforderlich ist.

Ein Extruder der gattungsgemäßen Art, welcher geeignet ist, diese komplexe Aufgabe zu lösen, zeichnet sich nach dem Kennzeichen des Anspruchs 1 aus,
durch einen zumindest ein kühlbares Gehäuse aufweisenden Einschnecken-Extruderteil, dessen Schnecke mit flachen und breiten Schneckengängen versehen ist und der eine Förderzone aufweist, in welcher die Gehäuseinnenwandung mit parallel zur Extruderachse verlaufenden Nuten versehen ist, und durch einen zwischen dem Einschnecken-Extruderteil und dem Düsenkopf angeordneten Planetenwalzen-Extruderteil mit mehreren schraubenverzahnten Planetenwalzen, die einerseits mit dem entpsrechende Innenverzahnung aufweisenden und temperaturgesteuerten bzw. -geregelten ortsfesten Außenzylinder sowie andererseits mit einer zu ihnen passend außenverzahnten und von der Schnecke des Einschnecken-Extruderteils drehangetriebenen temperaturgesteuerten bzw. -geregelten Zentralspindel kämmen, wobei von den Planetenwalzen zwischen dem Außenzylinder und der Zentralspindel mehrere auf einer Kreisbahn umlaufend verlagerbare Schmelzekammern gegeneinander abgegrenzt sind.

Es hat sich gezeigt, daß mit einem solchen Extruder nicht nur eine gute thermische und mechanische Homogenität des Plastifizierten PVC-Kunststoffs erreicht und eine genügende Förderleistung sichergestellt wird, sondern daß dabei der PVC-Kunststoff nur eine niedrige Durchschnittstemperatur erreicht und zugleich eine exakte Temperaturregelung der dem Düsenkopf zugeführten Schmelze zuläßt.

Nach einem weiterbildenden Erfindungsmerkmal ist gemäß Anspruch 2 vorgesehen, daß die die Nuten aufweisende Förderzone des Einschneckenextruderteils sich mindestens über den dem Planetenwalzen-Extruderteil entfernten und einer vollen Schneckensteigung, vorzugsweise drei Schneckensteigungen, entsprechenden Längenabschnitt erstreckt.

Ferner hat es sich bewährt, wenn nach Anspruch 3 die Förderzone des Einschnecken-Extruderteils in den dem Außenzylinder benachbarten Querschnittsbereich der Schmelzekammern des Planetenwalzen-Extruderteils einmündet.

Wichtig ist es nach der Erfindung ferner, daß entsprechend der Lehre des Anspruchs 4 im Planetenwalzen-Extruderteil zwischen den Zahnprofilen der Planetenwalzen, des Außenzylinders und der Zentralspindel jeweils ein gewisses Profilspiel ausgebildet ist.

Aufgrund der Umdrehung der Hauptspindel werden hierdurch jeweils zwischen den Flächen der miteinander in Eingriff gelangenden Zähne und Zahnlücken die Kunststoffmasse gewalkt und gepreßt, so daß auf der inneren Oberfläche des temperaturgesteuerten bzw. -geregelten Außenzylinders und der Zentralspindel dünne Materialschichten entstehen, innerhalb denen jedes Partikelchen außerordentlich vielen Walkvorgängen unterworfen ist. Die Folge ist dann, daß in der Kunststoffmasse bei mäßigen Temperaturbedingungen eine sehr intensive Walkwirkung und Mischwirkung herbeigeführt wird.

Für eine wirksame Walk- und Preßbearbeitung der Kunststoffmasse wie auch eine optimale Selbstreinigungswirkung des Einschnecken-Extruderteils erweist es sich ferner als wichtig, daß gemäß Anspruch 5 im Planetenwalzen-Extruderteil mehr als zwei, vorzugsweise vier bis acht Planetenwalzen gleichmäßig in Umfangsrichtung verteilt zwischen der Zentralspindel und dem Außenzylinder eingebaut sind. Dabei hat es sich als vorteilhaft erwiesen, wenn nach Anspruch 6 die Zähnezahl an den Planetenwalzen zu den Zähnezahlen an der Zentralspindel und dem Außenzylinder im Verhältnis von 1 : 2 : 4 oder 1 : 3 : 9 stehen.

Die Homogenisierung der Kunststoffmasse innerhalb des baulich relativ kurzen Planetenwalzen-Extruderteils wird dadurch besonders begünstigt, daß nach Anspruch 7 die verschiedenen Schmelzekammern ein sich ständig änderndes, aber jeweils untereinander annähernd gleiches Profil aufweisen. Da sich die auf einer Kreisbahn umlaufend verlagernden Schmelzekammern relativ zu der mit der Schnecke des Einschnecken-Extruderteils in Kontakt befindenden Kunststoffschmelze mit verminderter Geschwindigkeit bewegen, wird die Kunststoffschmelze bei ihrem Eintritt in den Planetenwalzen-Extruderteil quer zu **0216255**
ihrer Längsrichtung durchtrennt, so daß die dort noch inhomogene Schmelze nacheinander in verschiedene Schmelzekammern
des Planetenwalzen-Extruderteiles eindringt und in diesen bis
zum Erreichen des Düsenkopfes in optimaler Weise homogenisiert
und zugleich eine Verbesserung des Temperaturprofils im Schließkanal am Eingang des Düsenkopfes sicherstellt.

Schließlich hat es sich nach der Erfindung auch noch als besonders vorteilhaft für eine gute Mischwirkung und eine nahezu
ausgeglichene Temperaturverteilung über den Fließkanal erwiesen,
wenn gemäß Anspruch 8 die Schmelzekammern des Planetenwalzen-
Extruderteils am Düsenkopf in einen Ringspalt münden, der
sich an die stirnseitig offenen Zahnlücken der Innenverzahnung
des Außenzylinders anschließt.

Weitere Merkmale und Vorteile des Gegenstandes der Erfindung
werden nachfolgend an in der Zeichnung dargestellten Ausführungsbeispielen näher erläutert. Es zeigen

Fig. 1 in räumlicher sowie teilweise geschnittener Ansichtsdarstellung den erfindungswesentlichen Bereich eines
Extruders zur Plastifizierung und Homogenisierung von
PVC-Kunststoffen,

Fig. 2 den Extruder-Abschnitt der Fig. 1 in räumlicher Sprengdarstellung,

Fig. 3 in größerem Maßstab einen Schnitt entlang der Linie
III-III in Fig. 1,

Fig. 4 in größerem Maßstab und räumlicher Darstellung eine
Ansicht auf den erfindungswesentlichen Extruderbereich
in Pfeilrichtung IV der Fig. 1,

Fig. 5 in größerem Maßstab eine räumliche Ansichtsdarstellung
auf den erfindungswesentlichen Bereich des Extruders
in Pfeilrichtung V der Fig. 1 und

Fig. 6 in vergleichender grafischer Darstellung das Temperaturprofil der Schmelze am Eintritt in den Düsenkopf einerseits für einen Extruder, der nur mit einem Einschnecken-
Extruderteil arbeitet und andererseits für einen Extruder, der erfindungsgemäß die Hintereinanderschaltung
eines Einschnecken-Extruderteiles und eines Planetenwalzen-Extruderteils aufweist.

In den Fig. 1 und 2 der Zeichnung ist der erfindungswesentliche
Bereich eines Extruders 1 zur Plastifizierung und Homogenisierung
von PVC-Kunststoffen dargestellt. Dieser Extruder 1 weist
dabei einen Einschnecken-Extruderteil 2 auf, der einen Schneckenzylinder 3 und eine darin drehantreibbar aufgenommene Schnecke
4 umfaßt.

An den Einschnecken-Extruderteil 2 schließt sich ein Planetenwalzen-Extruderteil 5 an, der einen Außenzylinder 6 hat, in dem
eine Zentralspindel 7 sowie eine Mehrzahl, beispielsweise sechs,
von Planetenwalzen 8 untergebracht ist.

Der Außenzylinder 6 des Planetenwalzen-Extruderteils 5 ist
unter Zwischenschaltung eines Dichtungs- und/oder Zentrierringes 9 drehfest mit dem Schneckenzylinder 3 des Einschnecken-
Extruderteils 2 verbunden und weist an seinem Innenumfang eine
sich über die ganze Länge erstreckende Schraubenverzahnung 10
auf.

Die Zentralspindel 7 des Planetenwalzen-Extruderteils 5 ist
drehfest auf einem Mitnehmerzapfen 11 der Schnecke 4 des Einschnecken-Extruderteils 2 verkeilt, so daß sie zusammen mit der
Schnecke 4 rotiert.

Auch die Zentralspindel 7 ist an ihrem Außenumfang mit einer
sich über ihre ganze Länge erstreckenden Schraubenverzahnung 12
versehen.

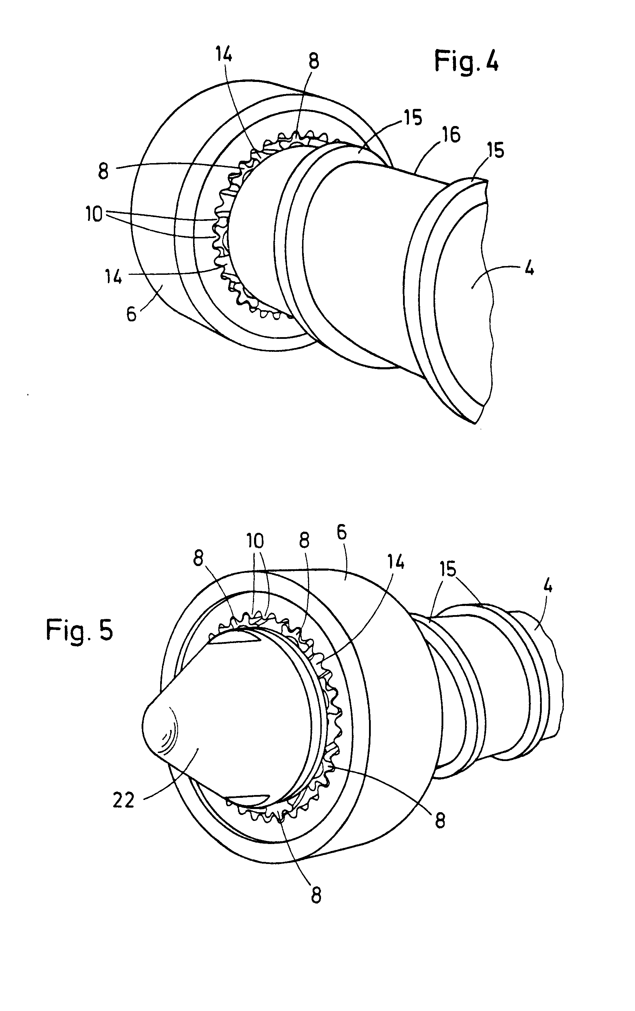

Die Planetenwalzen 8 des Planetenwalzen-Extruderteils 5 haben wiederum jeweils über ihre ganze Länge verlaufende Schraubenverzahnungen 13, die einerseits mit der Schraubenverzahnung 10 am Innenumfang des Außenzylinders 6 und andererseits mit der Schraubenverzahnung 12 am Außenumfang der Zentralspindel 7 ständig in Eingriff stehen. Dabei sind die Planetenwalzen 8 in Umfangsrichtung gleichmäßig verteilt zwischen der Zentralspindel 7 und dem Außengehäuse 6 angeordnet, derart, daß von ihnen zwischen der Zentralspindel 7 und dem Außenzylinder 6 mehrere Schmelzekammern 14 gegeneinander abgegrenzt werden, wie das deutlich der Fig. 3 zu entnehmen ist.

Aus Fig. 3 geht außerdem hervor, daß die Zähnezahlen an den Planetenwalzen 8 zu den Zähnezahlen an der Zentralspindel 7 und am Außenzylinder 6 in einem Verhältnis von 1:2:4 stehen. D.h., wenn jede der sechs im Winkelabstand von 60° zueinander um die Zentralspindel 7 und im Außenzylinder 6 angeordneten Planetenwalzen 8 - wie gezeigt - sechs schraubenförmig verlaufende Zähne 13 aufweist, damm ist die Zentralspindel 7 mit zwölf solcher schraubenförmig verlaufender Zähne 12 ausgestattet, während der Außenzylinder 6 vierundzwanzig schraubenförmig verlaufende Zähne 10 an seinem Innenumfang hat.

Die Schnecke 4 des Einschneckenextruderteils 2 ist an ihrem Umfang mit durch schraubenförmig verlaufende Stege 15 gegeneinander abgegrenzten, flachen und breiten Schneckengängen versehen. Der Schneckenzylinder 3 weist auf seiner Innenwandung mindestens an dem dem Planetenwalzen-Extruderteil 5 entfernten Längenabschnitt eine mit Nuten 17 versehene Förderzone 18 auf, die sich über eine volle Schneckensteigung, vorzugsweise über drei Schneckensteigungen, (Abstand zwischen benachbarten Schneckenstegen 15) erstreckt.

Der Fig. 3 kann noch entnommen werden, daß im Planetenwalzen-Extruderteil 5 zwischen den Zahnprofilen 13 der Planetenwalzen 8,

den Zahnprofilen 10 des Außenzylinders 6 und den Zahnprofilen 12 der Zentralspindel 7 jeweils ein gewisses Profilspiel ausgebildet ist.

Besonders die Fig. 4 läßt erkennen, daß die Förderzone 18 des Einschnecken-Extruderteils 2 in den dem Außenzylinder 6 benachbarten Querschnittsbereich der Schmelzekammern 14 des Planetenwalzen-Extruderteils 5 einmündet.

Nach den Fig. 1 und 2 der Zeichnung schließt sich an das vordere Ende des Planetenwalzen-Extruderteils 5 der Düsenkopf 19 unter Zwischenschaltung eines Zentrier- und Dichtungsrings 20 an. Dabei besteht der Düsenkopf aus einem rückwärtig durch eine Endplatte 21 abgeschlossenen Düsenkonus 22 und einem Düsenmantel 23, die miteinander das Düsenmundstück 24 bilden.

Der Düsenkopf 19 weist dabei an seinem dem Planetenwalzen-Extruderteil 5 zugewendeten Ende zwischen dem Düsenkonus 22 und dem Düsenmantel 23 einen Ringspalt 25 auf, in welchen die stirnseitig offenen Zahnlücken der Innenverzahnung 10 des Außenzylinders 6 einmünden, die wiederum ständig mit den Schmelzekammern 14 des Planetenwalzen-Extruderteils 5 in Strömungsverbindung stehen.

Während der Schneckenzylinder 3 des Einschnecken-Extruderteils 2 ständig gekühlt wird, ist der Außenzylinder 6 des Planetenwalzen-Extruderteils 5 so ausgerüst, daß er jederzeit einer exakten Temperaturregelung und/oder -steuerung unterworfen werden kann.

Die Schnecke 4 des Einschnecken-Extruderteils 2 und die Zentralspindel 7 des Planetenwalzen-Extruderteils 5 werden gemeinsam drehangetrieben. Dabei wird die Kunststoffmasse in den flachen und breiten Schneckengängen 16, also zwischen aufeinanderfolgenden Schneckenstegen 15 allmählich durch den Schneckenzylinde

0216255

3 vorgeschoben sowie dabei unter nur geringer Wärmeentwicklung anplastifiziert und angeliert.

Von der Förderzone der Schnecke 4 wird dann die Kunststoffmasse in den dem Außenzylinder 5 benachbarten Querschnittsbereich der einzelnen Schmelzekammern 14 des Einschneckenextruderteils 5 gedrückt.

Da sich die in der Innenverzahnung 10 des Außenzylinders 6 unter dem Drehantrieb der Zentralspindel 7 abwälzenden Planetenwalzen 8 mit geringerer Umlaufgeschwindigkeit bewegen, als der Umfangsbereich der Schnecke 4, wird die in der Förderzone 18 vorgeschobene Kunststoffmasse im Übergangsbereich zu den Schmelzekammern 14 ständig quer durchtrennt bzw. durchschnitten, und zwar bedingt durch die vorgegebene Relativverlagerung sämtlicher Schmelzekammern 14 in Umfangsrichtung.

der Zentralspindel 7 eine außerordentlich große Anzahl von Zahnkontakten einerseits zwischen der Zentralspindel 7 und den Planetenwalzen 8 sowie andererseits zwischen den Planetenwalzen 8 und dem Außenzylinder 6. Da zwischen den Zahnprofilen jeweils ein gewisses Profilspiel ausgebildet ist, wird innerhalb jeder Schmelzekammer 14 nicht nur eine außerordentlich gute Durchmischung der darin befindlichen Kunststoffmasse erreicht, sondern es findet auch eine umfangreiche Walk- und Preßbearbeitung des materials statt, weil diese sich jeweils in dünnen Schichten zwischen den ineinandergreifenden Zahnprofilen befindet. Jedes einzelne Kunststoffpartikelchen wird daher vielen tausend Walkvorgängen unterworfen, mit der Folge, daß in der Kunststoffmasse bei mäßigen Temperaturbedingungen eine sehr intensive Scherwirkung und Mischwirkung stattfindet.

Zugleich wird aber auch eine optimale Selbstreinigungswirkung ausgelöst, d.h. die zwischen den Zahnprofilen befindliche, plastifizierte Kunststoffmasse wird ständig in Arbeitsrichtung verlagert und kann sich daber im Planetenwalzen-Extruderteil 5 nicht festsetzen.

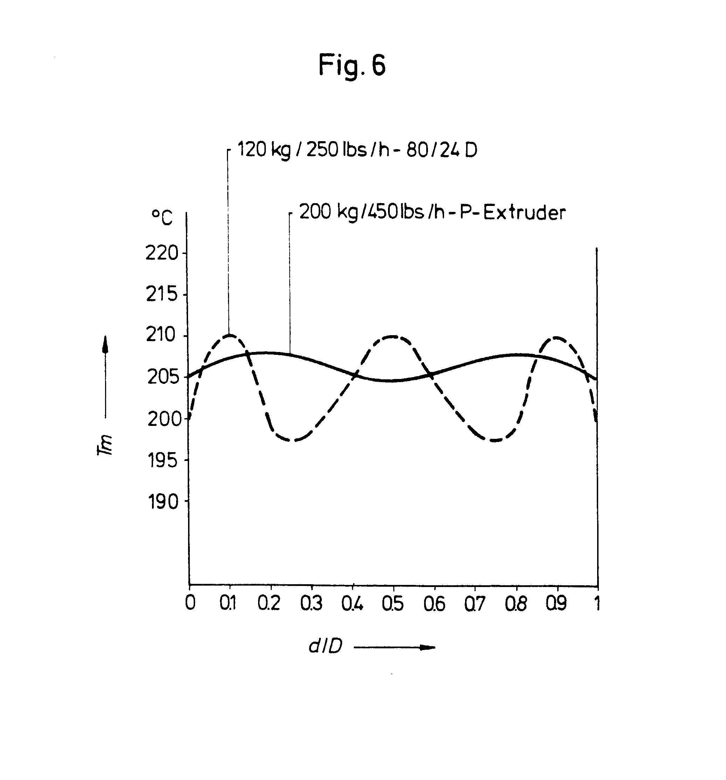

Da am Austrittsende des Planetenwalzen-Extruderteils 5 durch die die Rückseite des Düsenkonus 22 abschließende Endplatte 21 sichergestellt ist, daß die plastifizierte Kunststoffmasse nur durch den Ringspalt 25 in den Düsenkopf 19 gefördert werden kann, ist ohne weiteres klar, daß die Kunststoffmasse nur im Bereich der stirnseitig offenen Zahnlücken der Innenverzahnung 10 des Außenzylinders 6, also in einer Vielzahl von Materialsträngen kleinen Querschnitts in den Ringspalt 25 eintritt, die sich dort dann wieder miteinander vereinigen. Diese Vielfachunterteilung der aus dem Planetenwalzen-Extruderteil 5 in den Düsenkopf 19 übertretenden Kunststoffschmelze stellt eine optimale Temperaturverteilung über den gesamten Fließkanal des Düsenkopfes 19 sicher, d.h. die Temperaturverteilung über den Fließkanal ist nahezu ausgeglichen, wie das in Fig. 6 durch die voll ausgezogen gezeichnete Wellenlinie angedeutet ist.

Hingegen zeigt die strichpunktiert dargestellte Wellenlinie vergleichsweise die ungleichmäßige Temperaturverteilung im Fließkanal eines entsprechenden Düsenkopfes, wenn er von einem Extruder mit Kunststoffschmelze beliefert wird, welcher ohne Planetenwalzen-Extruderteil 5 arbeitet.

<u>Patentansprüche</u>

1. Extruder zur Plastifizierung und Homogenisierung von PVC-Kunststoffen mit angeschlossenem Düsenkopf, insbesondere zur Herstellung von Vorformlingen, für die Blasformung von Hohlkörpern, wie Flaschen oder dergl., g e k e n n z e i c h n e t   d u r c h einen zumindest ein kühlbares Gehäuse (3) aufweisenden Einschnecken-Extruderteil (2), dessen Schnecke (4) mit flachen und breiten Schneckengängen (16) versehen ist der eine Förderzone (18) aufweist, in welcher die Gehäuseinnenwandung mit parallel zur Extruderachse verlaufenden Nuten (17) versehen ist, und durch einen zwischen dem Einschnecken-Extruderteil (2) und dem Düsenkopf (19) angeordneten Planetenwalzen-Extruderteil (5) mit mehreren schraubenverzahnten Planetenwalzen (8), die einerseits mit dem entsprechende Innenverzahnung aufweisenden und temperaturgesteuerten bzw. -geregelten ortsfesten Außenzylinder (6) sowie andererseits mit einer zu ihnen passend außenverzahnten und von der Schnecke (4) des Einschnecken-Extruders (2) drehangetriebenen, temperaturgesteuerten bzw. -geregelten Zentralspindel (7) kämmen, wobei von den Planetenwalzen (8) zwischen dem Außenzylinder (6) und der Zentralspindel (7) mehrere auf einer Kreisbahn umlaufend verlagerbare Schmelzekammern (14) gegeneinander abgegrenzt sind.

2. Extruder nach Anspruch 1, d a d u r c h   g e k e n n z e i c h n e t , daß die die Nuten aufweisende Förderzone (18) des Einschnekken-Extruderteils (2) sich mindestens über einen dem Planetenwalzen-Extruderteil (5) entfernten und einer vollen Schnekkensteigung, vorzugsweise drei Schneckensteigungen entsprechenden Längenabschnitt erstreckt.

3. Extruder nach einem der Ansprüche 1 und 2,
d a d u r c h   g e k e n n z e i c h n e t ,
daß die Förderzone (18) des Einschnecken-Extruderteils
(2) in den dem Außenzylinder (6) benachbarten Querschnittsbereich der Schmelzekammern (14) des Planetenwalzen-Extruderteils (2) einmündet.

4. Extruder nach einem der Ansprüche 1 bis 3,
d a d u r c h   g e k e n n z e i c h n e t ,
daß im Planetenwalzen-Extruderteil (5) zwischen den Zahnprofilen (13) der Planetenwalzen (8), den Zahnprofilen
(10) des Außenzylinders und den Zahnprofilen (12) der
Zentralspindel (7) jeweils ein gewisses Profilspiel ausgebildet ist (Fig. 3).

5. Extruder nach einem der Ansprüche 1 bis 4,
d a d u r c h   g e k e n n z e i c h n e t ,
daß im Planetenwalzen-Extruderteil (5) mehr als zwei,
vorzugsweise vier bis acht, Planetenwalzen (8) gleichmäßig in Umfangsrichtung verteilt zwischen der Zentralspindel (7) und dem Außenzylinder (6) eingebaut sind
(Fig. 3).

6. Extruder nach einem der Ansprüche 1 bis 5,
d a d u r c h   g e k e n n z e i c h n e t ,
daß die Zähnezahlen an den Planetenwalzen (8) zu den
Zähnezahlen an der Zentralspindel (7) und am Außenzylinder
(6) im Verhältnis von 1 : 2 : 4 oder 1 : 3 : 9 stehen
(Fig. 3).

7. Extruder nach einem der Ansprüche 1 bis 6,
d a d u r c h   g e k e n n z e i c h n e t ,
daß die verschiedenen Schmelzekammern (14) ein sich
ständig änderndes, aber jeweils untereinander annähernd
gleiches Profil aufweisen (Fig. 3).

8. Extruder nach einem der Ansprüche 1 bis 7,
d a d u r c h   g e k e n n z e i c h n e t ,
daß die Schmelzekammern (14) des Planetenwalzen-Extruderteils (5) am Düsenkopf (19) in einen Ringspalt (25)
münden, der sich an die stirnseitig offenen Zahnlücken
der Innenverzahnung (10) des Außenzylinders (6) anschließt
(Fig. 1).

Fig. 1

Fig. 2

Fig. 3

Fig. 4

Fig. 5

# Fig. 6